# FASCICULE DE BREVET EUROPEEN

(11) **EP 2 260 272 B1**
(45) Date de publication et mention de la délivrance du brevet: **01.08.2012**
(21) Numéro de dépôt: 09728131.5
(22) Date de dépôt: 12.03.2009
(51) Int. Cl.: G01F 23/26

(54) **DETECTEUR CAPACITIF, PROCEDE DE FABRICATION D'UN DETECTEUR CAPACITIF ET DISPOSITIF DE MESURE INTEGRANT LEDIT DETECTEUR CAPACITIF**
KAPAZITIVER DETEKTOR, VERFAHREN ZU SEINER HERSTELLUNG UND EINE DEN KAPAZITIVEN DETEKTOR UMFASSENDE MESSVORRICHTUNG
CAPACITIVE DETECTOR, METHOD FOR MANUFACTURING THE SAME, AND MEASURING DEVICE COMPRISING SAID CAPACITIVE DETECTOR

(30) Priorité: 04.04.2008 FR 0852271
(43) Date de publication de la demande: 15.12.2010
(73) Titulaire: Universite Joseph Fourier, 38400 Saint Martin D'Uriage (FR)
(72) Inventeur: THIBAULT, Pierre, F-38410 Saint Martin D'Uriage (FR)
(74) Mandataire: Casalonga, Axel
(86) Numéro de dépôt international: PCT/FR2009/050407
(87) Numéro de publication internationale: WO 2009/122061

(56) Documents cités:
- EP-A- 1 553 389
- US-A1- 2004 149 032
- US-A1- 2005 172 712

## Description

La présente invention concerne le domaine des mesures de niveau de fluides ou d'épaisseur de films de fluides ou de présence de fluides.

Il est connu de réaliser des détecteurs capacitifs qui comprennent, sur une face d'un ruban isolant relativement épais, deux électrodes en forme de peignes dont les branches sont disposées alternativement les unes entre les autres ou interdigitées et, sur l'autre face, une électrode de masse. Il est connu que la présence de l'électrode de masse permet, par une mesure à trois fils, d'augmenter la sensibilité du dispositif, et de le protéger d'effets extérieurs parasites. En général, il est considéré que la capacité entre les électrodes interdigitées d'un tel dispositif est la somme d'une contribution diélectrique à l'intérieur du ruban et d'une autre contribution diélectrique sur la partie extérieure du plan des électrodes, qui vient du vide ou d'un fluide.

La demande de brevet européen numéro 1 553 389 décrit un détecteur de niveau d'huile ayant des électrodes en forme de peigne et une électrode de masse, enrobées dans un substrat en polyimide.

Le but de la présente invention est d'augmenter assez considérablement la sensibilité de tels détecteurs capacitifs en agissant sur les conditions de passage du champ électrique notamment dans le plan des électrodes en forme de peignes.

La présente invention a pour objet un détecteur capacitif.

Selon l'invention, ce détecteur capacitif comprend :
un ruban en une matière diélectrique ;
au moins un couple d'électrodes comprenant une première électrode en forme de peigne formée sur une première face dudit ruban et comprenant des branches transversales parallèles reliées entre elles par une branche de liaison longitudinale et une deuxième électrode en forme de peigne formée sur ladite première face dudit ruban et comprenant des branches transversales parallèles reliées entre elles par une branche de liaison longitudinale, les branches transversales desdites première et deuxième électrodes étant disposées alternativement les unes entre les autres selon au moins une période déterminée (λ) ;
et une troisième électrode en forme de couche formée sur l'autre face dudit ruban de permittivité diélectrique (ε) en vis-à-vis desdites première et deuxième électrodes.

Selon l'invention, l'épaisseur (e) du ruban diélectrique est inférieure ou égale à ladite période déterminée (λ) divisée par quatre fois PI, soit : λ//4π≥e.

Selon l'invention, le rapport résultant de la division en numérateur de la capacité (C) entre deux branches adjacentes desdites première et deuxième électrodes en présence d'au moins un fluide de permittivité diélectrique (ε_{f}) et en dénominateur par la permittivité diélectrique (ε_{f}) du fluide multipliée par la capacité (Co) entre les deux branches adjacentes des première et deuxième électrodes en présence du vide est supérieur ou égale à un, soit : C/(ε_{f} . Co)≥1.

La présente invention a également pour objet un dispositif de mesure de niveau d'un fluide ou d'épaisseur d'un film de fluide.

Selon l'invention, ce dispositif de mesure comprend : le détecteur capacitif ci-dessus et un moyen pour mesurer la capacité entre lesdites première et seconde électrodes.

La présente invention a également pour objet une procédure de fabrication d'un détecteur capacitif.

Selon l'invention, cette procédure comprend les étapes suivantes :
dépôt de couches d'une matière conductrice de l'électricité sur les deux faces d'un ruban en une matière diélectrique ;
gravure de l'une des couches de façon à réaliser au moins un couple d'électrodes comprenant une première électrode en forme de peigne et comprenant des branches transversales parallèles reliées entre elles par une branche de liaison longitudinale et une deuxième électrode en forme de peigne et comprenant des branches transversales parallèles reliées entre elles par une branche de liaison longitudinale ;
les branches transversales desdites première et deuxième électrodes étant disposées alternativement les unes entre les autres selon au moins une période déterminée (λ) ;
la couche formée sur l'autre face dudit ruban diélectrique formant une troisième électrode ;
ledit ruban diélectrique et lesdites première et deuxième électrodes étant choisis de telle sorte que :
   l'épaisseur (e) du ruban diélectrique est inférieure ou égale à ladite période déterminée (λ) divisée par quatre fois PI, soit : λ/4π≥e ;
   et le rapport résultant de la division en numérateur de la capacité (C) entre deux branches adjacentes desdites première et deuxième électrodes en présence d'au moins un fluide de permittivité diélectrique (ε_{f}) et en dénominateur par la permittivité diélectrique (ε_{f}) du fluide multipliée par la capacité (Co) entre les deux branches adjacentes des première et deuxième électrodes en présence du vide est supérieur ou égal à un, soit : C/(ε_{f} . Co)≥1.

Selon l'invention, les électrodes peuvent être recouvertes d'une couche de protection.

Le détecteur selon l'invention permet de réduire considérablement l'évanescence des lignes de champ électrique dans le ruban en une matière diélectrique et ainsi d'obtenir un champ électrique renforcé dans le fluide entre les branches des première et deuxième électrodes, conduisant à une sensibilité renforcée.

La présente invention sera mieux comprise à l'étude de détecteurs capacitifs décrits à titre d'exemples non limitatifs et représentés sur le dessin annexé dans lequel :
- la figure 1 représente une vue de dessus d'un détecteur capacitif selon l'invention ;
- la figure 2 représente une coupe longitudinale du détecteur capacitif de la figure 1 ;
- la figure 3 représente une coupe transversale du détecteur capacitif de la figure 1 ;
- et la figure 4 représente un schéma électronique d'un circuit électronique auquel est relié le détecteur précité.

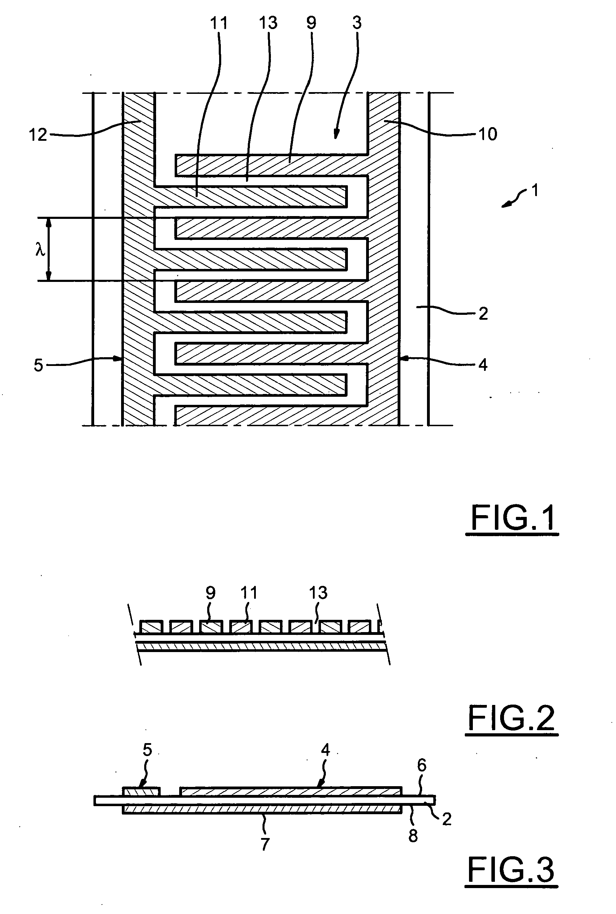

Le détecteur capacitif 1, représenté sur les figures 1, 2 et 3, comprend un ruban longitudinal 2 en une matière diélectrique, par exemple souple, un couple 3 d'électrodes comprenant une première électrode 4 et une deuxième électrode 5 formées sur une face 6 du ruban diélectrique 2, et une troisième électrode 7 formée sur l'autre face 8 du ruban diélectrique 2.

La première électrode 4 est en forme de peigne et comprend des branches transversales parallèles 9, régulièrement espacées et reliées entre elles par une branche de liaison longitudinale 10.

La deuxième électrode 5 est en forme de peigne et comprend des branches transversales parallèles 11, régulièrement espacées et reliées entre elles par une branche de liaison longitudinale 12.

Les branches transversales 9 et 11 des première et deuxième électrodes 4 et 5 sont disposées alternativement les unes entre les autres, présentent des largeurs égales et des longueurs égales et sont régulièrement espacées, les branches transversales 9 s'étendant en direction de la branche de liaison longitudinale 12 et les branches transversales parallèles 11 s'étendant en direction de la branche de liaison longitudinale 10. Une telle disposition est souvent appelée une structure interdigitée.

Ainsi, les branches transversales 9 et 11 sont disposées selon une période déterminée λ qui comprend l'addition d'une largeur des branches 9 de l'électrode 4, d'une largeur des branches 11 de l'électrode 5 et de deux espaces 13 entre deux branches adjacentes 9 et 11.

La troisième électrode 7 se présente sous la forme d'une couche en vis-à-vis des première et deuxième électrodes 4 et 5.

Pour fabriquer le détecteur capacitif 1, on peut procéder de la manière suivante.

On prend un ruban en une matière diélectrique, par exemple en une matière plastique telle qu'un poly imide comme du Kapton, ou tel qu'un polytétrafluoroéthylène (Teflon).

On dépose sur les faces opposées d'un tel ruban des couches d'une matière conductrice de l'électricité, par exemple en une matière métallique telle que du cuivre, ou de l'or. Ces couches peuvent recouvrir complètement les faces du ruban ou former des bandes longitudinales dont les bords sont distants des bords du ruban.

On procède à la gravure de l'une des couches déposées de façon à réaliser la première électrode et la deuxième électrode 4 et 5 telles que définies ci-dessus.

Le ruban diélectrique 2 et les première et deuxième électrodes 4 et 5 sont choisis de la manière à respecter les deux critères suivants.
(1) L'épaisseur (e) du ruban diélectrique 2 est inférieure, de préférence très inférieure, ou égale à ladite période déterminée λ divisée par quatre fois PI,
   soit : λ/4π≥e.
(2) Le rapport résultant de la division en numérateur de la capacité (C) entre deux branches transversales adjacentes 9 et 11 des première et deuxième électrodes 4 et 5 en présence d'un fluide diélectrique de permittivité diélectrique (ε_{f}) et en dénominateur par la permittivité diélectrique (ε_{f}) du fluide multipliée par la capacité (Co) entre les branches transversales adjacentes 9 et 11 des première et deuxième électrodes 4 et 5 en présence du vide est supérieur ou égal à .un,
   soit : C/(ε_{f} . Co)≥1.

Dans la mesure où les critères ci-dessus, en rapport avec la permittivité diélectrique (ε_{f}) du fluide, sont respectés, la sensibilité du détecteur 1 est optimale relativement à la constante diélectrique du fluide pour lequel il est prévu.

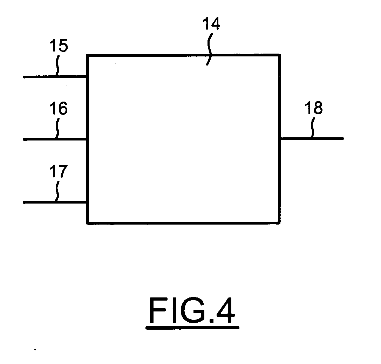

En référence à la figure 4, on peut voir que respectivement les première et seconde électrodes 4 et 5 et la troisième électrode 7 sont reliées à un circuit électronique 14 par trois fils électriques 15, 16 et 17.

Par exemple, les extrémités de ces fils peuvent être fixées à une extrémité du détecteur 1, sur des zones d'extrémité des première et seconde électrodes 4 et 5 et sur une zone d'extrémité de la troisième électrode 7 ramenée sur la face 6 de la bande 2 entre les zones d'extrémité des première et seconde électrodes 4 et 5 en contournant l'extrémité de cette bande 2.

Le circuit électronique 14 peut comprend une source excitation pour charger la première série d'électrodes de la branche A à travers un signal sur l'électrode 15 en référence à un potentiel porté par l'électrode 17. Le circuit électronique peut posséder un dispositif de mesure de la capacité mutuelle entre l'électrode 15 et l'électrode 16. L'électrode 16 est référencée par rapport à l'électrode 17 et le dispositif 14 assure que les potentiels des électrodes 16 et 17 sont identiques.

L'électrode 17 servant de référence, le dispositif de mesure est ainsi un dispositif dit à 3 terminaux, et peut faire intervenir une mesure par un pont, dit de Blumlein, de manière non limitative. A sa sortie 18, le circuit électronique 14 fournit un signal relatif à la mesure de la capacité mutuelle entre les électrodes 15 et 16.

Le détecteur 1 peut être utilisé dans différentes applications, notamment dans les applications suivantes.

Selon un exemple, le détecteur 1 peut être utilisé pour mesurer le niveau d'un liquide dans ce réservoir ou dans une conduite, en étant par exemple suspendu ou fixé à la paroi, les première et seconde électrodes 4 et 5 étant tournées vers l'intérieur, avec interposition éventuelle d'un isolant. Dans ce cas, le circuit électronique 14 fournit sur sa sortie 18 un signal relatif à la mesure de la capacité mutuelle entre les électrodes 15 et 16, dont la variation est proportionnelle à la longueur immergée dans le liquide.

Selon un autre exemple, le détecteur 1 peut être utilisé pour mesurer l'épaisseur d'un film d'un liquide le recouvrant. Dans ce cas, le circuit électronique 14 fournit sur sa sortie 18 un signal relatif à la mesure de la capacité mutuelle entre les électrodes 15 et 16, qui varie avec l'épaisseur de ce film, tant que cette épaisseur reste inférieure à une valeur asymptotique. Le cas d'un milieu diélectrique dont l'épaisseur est inférieure ou comparable à la longueur λ conduit à une mesure de la capacité qui dépend de manière univoque et croissante de l'épaisseur du film fluide.

Il est remarquable que la sensibilité du détecteur 1 définie par le rapport précédent est d'autant plus grande relativement à la valeur unitaire que la permittivité diélectrique ε_{f} du fluide est élevée.

Selon un autre exemple, le détecteur 1 peut être mis en place à l'intérieur d'une conduite ou d'une enceinte contenant au moins deux milieux diélectriques, éventuellement en mouvement, par exemple deux liquides, un liquide et un gaz ou deux gaz. Le détecteur 1 étant couvert pour une partie (x) de sa surface d'un premier milieu de permittivité diélectrique (ε₁) et pour une autre partie (1-x) d'un deuxième milieu diélectrique de permittivité électrique (ε₂), pouvant être le vide, la capacité entre les premières et secondes électrodes 4 et 5 est proportionnelle et telle que C=xC₁ +(1-x)C₂, la capacité (C₁) étant celle dudit détecteur entièrement recouvert du premier milieu et capacité (C₂) étant celle dudit détecteur entièrement recouvert du deuxième milieu. Dans ce cas, le circuit électronique 14 fournit sur sa sortie 18 un signal de capacité représentatif du rapport des surfaces du détecteur 1 respectivement couvertes par l'un des fluides et l'autre.

Selon un autre exemple, le détecteur 1 peut être utilisé pour détecter l'apparition d'un fluide déterminé sur sa surface frontale 6, par exemple l'apparition d'un film de vapeur sur une surface chauffée. Dans ce cas, le circuit électronique 14 fournit sur sa sortie 18 un signal de capacité comparativement à un seuil.

A titre illustratif, on va maintenant proposer des exemples de configuration du détecteur 1.

Dans le cas où le fluide est de l'azote liquide dont la permittivité diélectrique ε_{f} est égale à 1,46, soit ε_{f} =1,46, on peut choisir le détecteur 1 de la manière suivante.

La largeur des branches transversales 9 et 11 des première et deuxième électrodes 4 et 5 peut être égale à 300 micromètres et l'espace séparant deux branches transversales adjacentes peut être égal à 150 micromètres, de telle sorte que la période est égale à 900 micromètres, la distance entre les extrémités des branches transversales 9 et 11 et respectivement les branches longitudinales 10 et 12 étant aussi égale à150 micromètres.

La longueur des branches transversales 9 et 11 peut être comprise entre deux et dix fois l'espace les séparant, par exemple cinq fois. En particulier, cette longueur peut être comprise entre deux et dix millimètres.

L'épaisseur des branches des première et deuxième électrodes 4 et 5 et l'épaisseur de la troisième électrode peuvent être de 17,5 micromètres.

Ainsi, λ/4π est égal à environ 143 micromètres, chiffre qui est largement supérieur aux 25 micromètres d'épaisseur du ruban diélectrique 2.

La permittivité diélectrique ε du plastique polyimide formant ledit ruban est sensiblement égale à 3,4.

La capacité Co entre les deux branches transversales adjacentes 9 et 11 des première et deuxième électrodes 4 et 5 en présence du vide est sensiblement égale à 5,62 pF/m.

La capacité (C) entre deux branches transversales adjacentes 9 et 11 des première et deuxième électrodes 4 et 5 en présence d'azote liquide est sensiblement égale à 8,51 pF/m. Ainsi, le rapport C/(ε_{f} . Co) est sensiblement égal à 1,037, chiffre qui est supérieur à un.

Une extension de l'exemple ci-dessus peut être appliquée à un fluide comme le toluène, dont la constante diélectrique ε_{f} =2,38 sous conditions atmosphériques. Ainsi, le rapport C/(ε_{f}.Co) est sensiblement égal à 1,103, chiffre qui est supérieur à un.

Dans le cas où le détecteur 1 est destiné à détecter un film uniforme d'azote liquide, des épaisseurs relatives de 50, 100, 200, 400 micromètres, ou infini, donnent des capacités C de 6,77 ; 7,58 ; 8,27 ; 8,45 ; ou 8,51 pF/m.

Selon une variante, les faces du détecteur 1 peuvent être recouvertes des couches fines de protection en une matière diélectrique.

## Revendications

1. Détecteur capacitif comprenant :
un ruban en une matière diélectrique (2),
au moins un couple (3) d'électrodes comprenant une première électrode (4) en forme de peigne formée sur une première face dudit ruban et comprenant des branches transversales parallèles (9) reliées entre elles par une branche de liaison longitudinale (10) et une deuxième électrode (5) en forme de peigne formée sur ladite première face dudit ruban et comprenant des branches transversales parallèles (11) reliées entre elles par une branche de liaison longitudinale (12), les branches transversales desdites première et deuxième électrodes étant disposées alternativement les unes entre les autres selon au moins une période déterminée (λ),
et une troisième électrode (7) en forme de couche ;
**caractérisé par le fait que** la troisième electrode est formée sur l'autre face dudit ruban en vis-à-vis desdites première et deuxième électrodes;
l'épaisseur (e) du ruban diélectrique (2) est inférieure ou égale à ladite période déterminée (λ) divisée par quatre fois PI, soit : λ/4π≥e ;
et que le rapport résultant de la division en numérateur de la capacité (C) entre deux branches adjacentes (9, 11) desdites première et deuxième électrodes en présence d'au moins un fluide de permittivité diélectrique (ε_{f}) et en dénominateur par la permittivité diélectrique (ε_{f}) du fluide multipliée par la capacité (Co) entre les deux branches adjacentes des première et deuxième électrodes en présence du vide est supérieur ou égale à un, soit : C/(ε_{f} . Co)≥1.

2. Détecteur capacitif selon la revendication 1, dans lequel les électrodes sont recouvertes d'une couche de protection.

3. Dispositif de mesure de niveau d'un fluide ou d'épaisseur d'un film de fluide comprenant
un détecteur capacitif (1) selon l'une des revendications 1 et 2 ;
et un moyen 14) pour mesurer la capacité entre lesdites première et seconde électrodes.

4. Procédé de fabrication d'un détecteur capacitif, comprenant les étapes suivantes :
dépôt de couches d'une matière conductrice de l'électricité sur les deux faces d'un ruban en une matière diélectrique ;
gravure de l'une des couches de façon à réaliser au moins un couple d'électrodes (3) comprenant une première électrode (4) en forme de peigne et comprenant des branches transversales parallèles reliées entre elles par une branche de liaison longitudinale et une deuxième électrode (5) en forme de peigne et comprenant des branches transversales parallèles reliées entre elles par une branche de liaison longitudinale ;
les branches transversales (9, 11) desdites première et deuxième électrodes étant disposées alternativement les unes entre les autres selon au moins une période déterminée (λ) ;
la couche formée sur l'autre face dudit ruban diélectrique formant une troisième électrode ;
ledit ruban diélectrique et lesdites première et deuxième électrodes étant choisis de telle sorte que :
l'épaisseur (e) du ruban diélectrique (2) est inférieure ou égale à ladite période déterminée (λ) divisée par quatre fois PI, soit : λ/4π≥e ;
et le rapport résultant de la division en numérateur de la capacité (C) entre deux branches adjacentes (9, 11) desdites première et deuxième électrodes en présence d'au moins un fluide de permittivité diélectrique (ε_{f}) et en dénominateur par la permittivité diélectrique (ε_{f}) du fluide multipliée par la capacité (Co) entre les deux branches adjacentes des première et deuxième électrodes en présence du vide est supérieur ou égale à un, soit : C/(ε_{f} . Co)≥1.

## Claims

1. Capacitive detector including:
a ribbon made of a dielectric material (2);
at least one pair (3) of electrodes including a first electrode (4) in the form of a comb formed on a first surface of said ribbon and including parallel transverse branches (9) interconnected by a longitudinal connection branch (10) and a second electrode (5) in the form of a comb formed on said first surface of said ribbon and including parallel transverse branches (11) interconnected by a longitudinal connection branch (12), the transverse branches of said first and second electrodes being disposed alternately between one another according to at least one determined period (λ);
and a third electrode (7) in the form of a layer;
**characterized in that** the third electrode is formed on the other surface of said ribbon opposite said first and second electrodes;
the thickness (e) of the dielectric ribbon (2) is less than or equal to said determined period (λ) divided by four times PI, i.e.: λ/4π≥e;
and that the ratio resulting from the division, as numerator, of the capacitance (C) between two adjacent branches (9, 11) of said first and second electrodes in the presence of at least one fluid with a dielectric permittivity (ε_{f}) and, as denominator, by the dielectric permittivity (ε_{f}) of the fluid multiplied by the capacitance (Co) between the two adjacent branches of the first and second electrodes in the presence of the vacuum is greater than or equal to one, i.e.: C/(ε_{f} . Co)≥1.

2. Capacitive detector according to Claim 1, in which the electrodes are covered with a protective layer.

3. Device for measuring the level of a fluid or the thickness of a film of fluid including
a capacitive detector (1) according to either of Claims 1 and 2;
and a means (14) for measuring the capacitance between said first and second electrodes.

4. Method for manufacturing a capacitive detector, including the following steps:
deposition of layers of an electrically conducting material on the two surfaces of a ribbon made of a dielectric material;
etching of one of the layers in order to implement at least one pair of electrodes (3) including a first electrode (4) in the form of a comb and including parallel transverse branches interconnected by a longitudinal connection branch and a second electrode (5) in the form of a comb and including parallel transverse branches interconnected by a longitudinal connection branch;
the transverse branches (9, 11) of said first and second electrodes being disposed alternately between one another according to at least one determined period (λ);
the layer formed on the other surface of said dielectric ribbon forming a third electrode;
said dielectric ribbon and said first and second electrodes being chosen in such a way that:
the thickness (e) of the dielectric ribbon (2) is less than or equal to said determined period (λ) divided by four times PI, i.e.: λ/4π≥e;
and the ratio resulting from the division, as numerator, of the capacitance (C) between two adjacent branches (9, 11) of said first and second electrodes in the presence of at least one fluid with a dielectric permittivity (ε_{f}) and, as denominator, by the dielectric permittivity (ε_{f}) of the fluid multiplied by the capacitance (Co) between the two adjacent branches of the first and second electrodes in the presence of the vacuum is greater than or equal to one, i.e.: C/(ε_{f} . Co)≥1.

## Patentansprüche

1. Kapazitiver Detektor, der Folgendes umfasst :
ein Band aus einem dielektrischen Material (2),
wenigstens ein Paar (3) Elektroden, das eine erste Elektrode (4) in Kammform, die auf einer ersten Fläche des Bandes gebildet ist und parallele transversale Zweige (9) enthält, die miteinander durch einen longitudinalen Verbindungszweig (10) verbunden sind, und eine zweite Elektrode (5) in Kammform, die auf der ersten Fläche des Bandes gebildet ist und parallele transversale Zweige (11) enthält, die durch einen longitudinalen Verbindungszweig (12) miteinander verbunden sind, aufweist, wobei die transversalen Zweige der ersten und der zweiten Elektrode abwechselnd mit wenigstens einer bestimmten Periode (λ) angeordnet sind,
und eine dritte Elektrode (7) in Schichtform;
**dadurch gekennzeichnet, dass**
die dritte Elektrode auf der anderen Fläche des Bandes gegenüber der ersten und der zweiten Elektrode gebildet ist;
die Dicke (e) des dielektrischen Bandes (2) kleiner oder gleich der bestimmten Periode (λ), dividiert durch vier mal PI, d. h. λ/4π ≥ e, ist;
und das Verhältnis, das sich aus der Division der Kapazität (C) zwischen zwei benachbarten Zweigen (9, 11) der ersten und der zweiten Elektrode in Gegenwart wenigstens eines Fluids mit absoluter Dielektrizitätskonstante (ε_{f}) als Zähler und der absoluten Dielektrizitätskonstante (ε_{f}) des Fluids multipliziert mit der Kapazität (Co) zwischen den zwei benachbarten Zweigen der ersten und der zweiten Elektrode im Vakuum als Nenner ergibt, größer oder gleich eins, d. h.: C/ (ε_{f} . Co) ≥ 1, ist.

2. Kapazitiver Detektor nach Anspruch 1, wobei die Elektroden mit einer Schutzschicht überwogen sind.

3. Vorrichtung zum Messen des Pegels eines Fluids oder der Dicke eines Fluidfilms, die Folgendes umfasst:
einen kapazitiven Detektor (1) nach einem der Ansprüche 1 und 2,
und ein Mittel (14) zum Messen der Kapazität zwischen der ersten und der zweiten Elektrode.

4. Verfahren zum Herstellen eines kapazitiven Detektors, das die folgenden Schritte umfasst:
Ablagern von Schichten aus einem elektrisch leitenden Material auf den zwei Flächen eines Bandes aus einem dielektrischen Material;
Ätzen einer der Schichten in der Weise, dass wenigstens ein Paar Elektroden (3) verwirklicht wird, das eine erste Elektrode (4) in Kammform, die parallele transversale Zweige, die durch einen longitudinalen Verbindungszweig miteinander verbunden sind, enthält, und eine zweite Elektrode (5) in Kammform, die parallele transversale Zweige, die durch einen longitudinalen Verbindungszweig miteinander verbunden sind, enthält, aufweist;
wobei die transversalen Zweige (9, 11) der ersten und der zweiten Elektrode abwechselnd mit wenigstens einer bestimmten Periode (λ) angeordnet sind;
die auf der anderen Fläche des dielektrischen Bandes gebildete Schicht eine dritte Elektrode bildet;
das dielektrische Band und die erste und die zweite Elektrode in der Weise gewählt sind, dass:
die Dicke (e) des dielektrischen Bandes (2) kleiner oder gleich der bestimmten Periode (λ), dividiert durch vier mal PI, d. h. λ/4π ≥ e, ist;
und das Verhältnis, das sich aus der Division der Kapazität (C) zwischen zwei benachbarten Zweigen (9, 11) der ersten und der zweiten Elektrode in Gegenwart wenigstens eines Fluids mit absoluter Dielektritätskanstante (ε_{f}) als Zähler und der absoluten Dieleletrizitätskonstante (ε_{f}) des Fluids multipliziert mit der Kapazität (Co) zwischen den zwei benachbarten Zweigen der ersten und der zweiten Elektrode im Vakuum als Nenner ergibt, größer oder gleich eins, d. h.: C/(ε_{f} . Co) ≥ 1, ist.
